# EUROPEAN PATENT SPECIFICATION

(11) **EP 3 013 883 B1**
(45) Date of publication and mention of the grant of the patent: **03.05.2017**
(21) Application number: 14739330.0
(22) Date of filing: 25.06.2014
(51) Int. Cl.: C08G 18/42, C08G 18/76, C08G 18/66, C08G 18/32, C08G 18/40

(54) **FAST RECOVERY HARD THERMOPLASTIC POLYURETHANES**
HARTE THERMOPLASTISCHE POLYURETHANE MIT SCHNELLER RÜCKSTELLUNG
POLYURÉTHANE THERMOPLASTIQUE À RÉCUPÉRATION RAPIDE

(30) Priority: 27.06.2013 US 201361840039 P
(43) Date of publication of application: 04.05.2016
(73) Proprietor: Lubrizol Advanced Materials, Inc., Cleveland, OH 44141-3247 (US)
(72) Inventor: FARKAS, Julius, Cleveland, Ohio 44141-3247 (US); VONTORCIK, Joseph J. Jr., Cleveland, Ohio 44141-3247 (US); LU, Qiwei, Cleveland, Ohio 44141-3247 (US); JACOBS, Charles P., Cleveland, Ohio 44141-3247 (US)
(74) Representative: Bradley, Josephine Mary
(86) International application number: PCT/US2014/044001
(87) International publication number: WO 2014/210098

(56) References cited:
- GB-A- 1 149 791
- US-B1- 6 221 999
- ZIA, KHALID MAHMOOD, ET AL.: "MORPHOLOGICAL STUDIES OF POLYURETHANE ELASTOMERS EXTENDED WITH ALPHA, OMEGA ALKANE DIOLS", IRANIAN POLYMER JOURNAL, vol. 17, no. 1, 22 January 2008 (2008-01-22), pages 61-72, XP002729045,

## Description

The thermoplastic polyurethane compositions described herein have very good recovery properties, rebound resilience, or both, while also having good hardness. It has been difficult to provide thermoplastic polyurethane compositions with this combination of properties. Some compositions described herein also provide low haze and/or good clarity properties. This combination of properties make the thermoplastic polyurethane compositions described herein useful materials for application that require fast recovery, good rebound resilience, or both while also requiring hard materials, and in some embodiments low haze and/or good clarity.

### BACKGROUND

This technology relates to hard thermoplastic polyurethane compositions with good recovery properties, rebound resilience, or both, while also having good hardness.

Recovery properties of a polymer, and/or the determination of whether a specific polymer has "fast recovery" properties, is based on how long it takes for an article made of the polymer to return to its original shape after being deformed. For example, how long it takes a shoe sole made of the polymer in question, when it is flexed and/or bent with the application of force, to return to its original shape once the force is released. For many applications, including shoe sole applications, the faster the recovery the better, that is, the faster the article returns to its original shape the better. Thus materials with fast recovery properties are better suited for such applications.

Rebound resilience is an indication of hysteretic energy loss that can also be defined by the relationship between storage modulus and loss modulus. The percent rebound measured is inversely proportional to the hysteretic loss. Percentage resilience or rebound resilience is commonly used in quality control testing of polymers and compounding chemicals. Rebound resilience can be determined by a freely falling pendulum hammer and/or ball that is dropped from a given height that impacts a test specimen and imparts to it a certain amount of energy. A portion of that energy is returned by the specimen to the pendulum and may be measured by the extent to which the pendulum rebounds, whereby the restoring force is determined by gravity.

It has been difficult to provide hard thermoplastic polyurethane compositions with this combination of properties. Often efforts to improve the recovery properties and/or rebound resilience of hard thermoplastic polyurethane compositions results in materials with reduced hardness. Some applications and uses require hard materials, so this loss of hardness may make a thermoplastic polyurethane composition unacceptable, or at least less attractive, for these applications.

There is an ongoing need for hard thermoplastic polyurethane compositions that also have good recovery properties and/or rebound resilience. The technology described herein provides such hard thermoplastic polyurethane compositions.

There is also an ongoing need for hard thermoplastic polyurethane compositions that also have good recovery properties and/or rebound resilience that also have low haze and/or good clarity. The technology described herein provides such hard thermoplastic polyurethane compositions.

### SUMMARY

The disclosed technology provides a thermoplastic polyurethane (TPU) composition comprising the reaction product of: a) a polyisocyanate; b) a polyol component comprising at least one polycaprolactone polyester polyol; and c) a chain extender component comprising at least one diol chain extender of the general formula HO-(CH₂)ₓ-OH wherein x is an integer from 9 to 16. The polyisocyanate and chain extender make up a hard segment of the thermoplastic polyurethane composition and the thermoplastic polyurethane composition comprises 59.8 to 77.0 weight percent hard segment. The described thermoplastic polyurethane composition has a Shore D hardness of more than 50.

The technology also provides the described thermoplastic polyurethane compositions where: i) the composition has a haze value of less than 36; and ii) the composition has a rebound value greater than 35.

The technology also provides the described thermoplastic polyurethane compositions where the thermoplastic polyurethane composition has a Shore D hardness of more than 50.

The technology also provides the described thermoplastic polyurethane compositions where the polyisocyanate component comprises 4,4'-methylenebis(phenyl isocyanate).

The technology also provides the described thermoplastic polyurethane compositions where the polycaprolactone polyester polyol has a number average molecular weight (Mn) from 2000 to 3000.

The technology also provides the described thermoplastic polyurethane compositions where the chain extender component comprises 1,9-nonanediol, 1,10-decanediol, 1,11-undecanediol, 1,12-dodecanediol, or a combination thereof.

The technology also provides the described thermoplastic polyurethane compositions where the polyisocyanate component further comprises dicyclohexylmethane-4,4'-diisocyanate (H12MDI), hexamethylene diisocyanate (HDI), toluene diisocyanate (TDI), isophorone diisocyanate (IPDI), lysine diisocyanate (LDI), 1,4-butane diisocyanate (BDI), isophorone diisocyanate (PDI), 1,4-cyclohexyl diisocyanate (CHDI), 3,3'-Dimethyl-4,4'-biphenylene diisocyanate (TODI), 1,5-naphthalene diisocyanate (NDI), or any combination thereof.

The technology also provides the described thermoplastic polyurethane compositions where the polyol component further comprises a polyether polyol, polycarbonate polyol, polysiloxane polyol, a non-polycaprolactone polyester polyol, or any combinations thereof.

The technology also provides the described thermoplastic polyurethane compositions where the chain extender component further comprises one or more additional diol chain extenders, diamine chain extenders, or a combination thereof.

The technology also provides the described thermoplastic polyurethane compositions where the thermoplastic polyurethane composition comprises one or more additional additives selected from the group consisting of pigments, UV stabilizers, UV absorbers, antioxidants, lubricity agents, heat stabilizers, hydrolysis stabilizers, cross-linking activators, flame retardants, layered silicates, fillers, colorants, reinforcing agents, adhesion mediators, impact strength modifiers, and antimicrobials.

The technology further includes a process of making any of the described thermoplastic polyurethane compositions. In some embodiments, the process includes the steps of: (I) reacting: a) a polyisocyanate; b) a polyol component comprising at least one polycaprolactone polyester polyol; and c) a chain extender component comprising at least one diol chain extender of the general formula HO-(CH₂)ₓ-OH wherein x is an integer from 9 to 16. The polyisocyanate and chain extender make up a hard segment of the thermoplastic polyurethane composition and the thermoplastic polyurethane composition comprises 59.8 to 77.0 weight percent hard segment. The resulting thermoplastic polyurethane composition has a Shore D hardness of more than 50.

The technology also provides the described process of making the thermoplastic polyurethane compositions described herein where the process further comprises the step of: (II) mixing the thermoplastic polyurethane composition of step (I) with one or more additional additives selected from the group consisting of pigments, UV stabilizers, UV absorbers, antioxidants, lubricity agents, heat stabilizers, hydrolysis stabilizers, cross-linking activators, flame retardants, layered silicates, fillers, colorants, reinforcing agents, adhesion mediators, impact strength modifiers, and antimicrobials.

The technology further includes an article that includes any of the described thermoplastic polyurethane compositions.

The technology further includes a method of improving the recovery properties of a thermoplastic polyurethane composition, said method including the steps of: (1) reacting: a) a polyisocyanate; b) a polyol component comprising at least one polycaprolactone polyester polyol; and c) a chain extender component comprising at least one diol chain extender of the general formula HO-(CH₂)ₓ-OH wherein x is an integer from 9 to about 16. The polyisocyanate and chain extender make up a hard segment of the thermoplastic polyurethane composition and the thermoplastic polyurethane composition comprises 59.8 to 77.0 weight percent hard segment. The resulting thermoplastic polyurethane composition has a Shore D hardness of more than 50.

### DETAILED DESCRIPTION

Various preferred features and embodiments will be described below by way of non-limiting illustration.

The technology described herein provides a thermoplastic polyurethane (TPU) composition that includes the reaction product of: a) a polyisocyanate; b) a polyol component comprising at least one polycaprolactone polyester polyol; and c) a chain extender component comprising at least one diol chain extender of the general formula HO-(CH₂)ₓ-OH wherein x is an integer from 9 to 16. The polyisocyanate and chain extender make up a hard segment of the thermoplastic polyurethane composition and the thermoplastic polyurethane composition comprises 59.8 to 77.0 weight percent hard segment. The resulting thermoplastic polyurethane compositions have a Shore D hardness of more
than 50, and in other embodiments at least 60, as measured by ASTM D2240.

### The polyisocyanate

The TPU compositions described herein are made using: (a) a polyisocyanate component, which includes one or more polyisocyanates. In some embodiments, the polyisocyanate component includes one or more diisocyanates.

Suitable polyisocyanates include aromatic diisocyanates, aliphatic diisocyanates, or combinations thereof. In some embodiments, the polyisocyanate component includes one or more aromatic diisocyanates. In some embodiments, the polyisocyanate component is essentially free of, or even completely free of, aliphatic diisocyanates.

Examples of useful polyisocyanates include aromatic diisocyanates such as 4,4'-methylenebis(phenyl isocyanate) (MDI), m-xylene diisocyanate (XDI), phenylene-1,4-diisocyanate, naphthalene-1,5-diisocyanate, and toluene diisocyanate (TDI); as well as aliphatic diisocyanates such as isophorone diisocyanate (IPDI), 1,4-cyclohexyl diisocyanate (CHDI), decane-1,10-diisocyanate, lysine diisocyanate (LDI), 1,4-butane diisocyanate (BDI), isophorone diisocyanate (PDI), 3,3'-Dimethyl-4,4'-biphenylene diisocyanate (TODI), 1,5-naphthalene diisocyanate (NDI), and dicyclohexylmethane-4,4'-diisocyanate (H12MDI). Mixtures of two or more polyisocyanates may be used. In some embodiments, the polyisocyanate is MDI and/or H12MDI. In some embodiments, the polyisocyanate includes MDI. In some embodiments, the polyisocyanate may include H12MDI. In some embodiments, the polyisocyanate component is essentially free of, or even completely free of, hexamethylene diisocyanate (HDI).

In some embodiments, the thermoplastic polyurethane is prepared with a polyisocyanate component that includes MDI. In some embodiments, the thermoplastic polyurethane is prepared with a polyisocyanate component that consists essentially of MDI. In some embodiments, the thermoplastic polyurethane is prepared with a polyisocyanate component that consists of MDI.

In some embodiments, the thermoplastic polyurethane is prepared with a polyisocyanate component that includes (or consists essentially of, or even consists of) MDI and at least one of H12MDI, HDI, TDI, IPDI, LDI, BDI, PDI, CHDI, TODI, and NDI.

### The polyol component

The TPU compositions described herein are made using: (b) a polyol component comprising at least one polycaprolactone polyester polyol.

The polycaprolactone polyester polyols useful in the technology described herein include polyester diols derived from caprolactone monomers. The polycaprolactone polyester polyols are terminated by primary hydroxyl groups. Suitable polycaprolactone polyester polyols may be made from ε-caprolactone and a bifunctional initiator such as diethylene glycol, 1,4-butanediol, or any of the other glycol and/or diol listed herein. In some embodiments, the polycaprolactone polyester polyols are linear polyester diols derived from caprolactone monomers.

Useful examples include CAPA™ 2202A, a 2000 number average molecular weight (Mn) linear polyester diol, and CAPA™ 2302A, a 3000 Mn linear polyester diol, both of which are commercially available from Perstorp Polyols Inc. These materials may also be described as polymers of 2-oxepanone and 1,4-butanediol.

The polycaprolactone polyester polyols may be prepared from 2-oxepanone and a diol, where the diol may be 1,4-butanediol, diethylene glycol, monoethylene glycol, hexane diol, 2,2-dimethyl-1,3-propanediol, or any combination thereof. In some embodiments, the diol used to prepare the polycaprolactone polyester polyol is linear. In some embodiments, the polycaprolactone polyester polyol is prepared from 1,4-butanediol.

In some embodiments, the polycaprolactone polyester polyol has a number average molecular weight from 2000 to 3000.

In some embodiments, the polyol component used to prepare the TPU further includes one or more additional polyols. Examples of suitable additional polyols include a polyether polyol, polycarbonate polyol, polysiloxane polyol, a non-polycaprolactone polyester polyol, or any combinations thereof. In other embodiments, the polyol component used to prepare the TPU is free of one or more of these additional polyols, and in some embodiments the polyol component consists essentially of the polycaprolactone polyester polyol described above. In other embodiments, the polyol component used to prepare the TPU is free of polyether polyols.

These optional additional polyols may also be described as hydroxyl terminated intermediates. When present, they may include one or more hydroxyl terminated non-polycaprolactone polyesters, one or more hydroxyl terminated polyethers, one or more hydroxyl terminated polycarbonates, one or more hydroxyl terminated polysiloxanes, or mixtures thereof.

Suitable hydroxyl terminated non-polycaprolactone polyester intermediates include linear non-polycaprolactone polyesters having a number average molecular weight (Mn) of from about 500 to about 10,000, from about 700 to about 5,000, or from about 700 to about 4,000, and generally have an acid number generally less than 1.3 or less than 0.5. The molecular weight is determined by assay of the terminal functional groups and is related to the number average molecular weight. The polyester intermediates may be produced by (1) an esterification reaction of one or more glycols with one or more dicarboxylic acids or anhydrides or (2) by transesterification reaction, i.e., the reaction of one or more glycols with esters of dicarboxylic acids. Mole ratios generally in excess of more than one mole of glycol to acid are preferred so as to obtain linear chains having a preponderance of terminal hydroxyl groups. The dicarboxylic acids of the desired polyester can be aliphatic, cycloaliphatic, aromatic, or combinations thereof. Suitable dicarboxylic acids which may be used alone or in mixtures generally have a total of from 4 to 15 carbon atoms and include: succinic, glutaric, adipic, pimelic, suberic, azelaic, sebacic, dodecanedioic, isophthalic, terephthalic, cyclohexane dicarboxylic, and the like. Anhydrides of the above dicarboxylic acids such as phthalic anhydride, tetrahydrophthalic anhydride, or the like, can also be used. Adipic acid is often a preferred acid. The glycols which are reacted to form a desirable non-polycaprolactone polyester intermediate can be aliphatic, aromatic, or combinations thereof, including any of the glycol described above in the chain extender section, and have a total of from 2 to 20 or from 2 to 12 carbon atoms. Suitable examples include ethylene glycol, 1,2-propanediol, 1,3-propanediol, 1,3-butanediol, 1,4-butanediol, 1,5-pentanediol, 1,6-hexanediol, 2,2-dimethyl-1,3-propanediol, 1,4-cyclohexanedimethanol, decamethylene glycol, dodecamethylene glycol, and mixtures thereof.

Suitable hydroxyl terminated polyether intermediates include polyether polyols derived from a diol or polyol having a total of from 2 to 15 carbon atoms. In some embodiments, the diol or polyol is reacted with an ether comprising an alkylene oxide having from 2 to 6 carbon atoms, typically ethylene oxide or propylene oxide or mixtures thereof. For example, hydroxyl functional polyether can be produced by first reacting propylene glycol with propylene oxide followed by subsequent reaction with ethylene oxide. Primary hydroxyl groups resulting from ethylene oxide are more reactive than secondary hydroxyl groups and thus are preferred. Useful commercial polyether polyols include poly(ethylene glycol) comprising ethylene oxide reacted with ethylene glycol, poly(propylene glycol) comprising propylene oxide reacted with propylene glycol, poly(tetramethylene glycol) comprising water reacted with tetrahydrofuran (PTMEG). In some embodiments, the polyether intermediate includes PTMEG. Suitable polyether polyols also include polyamide adducts of an alkylene oxide and can include, for example, ethylenediamine adduct comprising the reaction product of ethylenediamine and propylene oxide, diethylenetriamine adduct comprising the reaction product of diethylenetriamine with propylene oxide, and similar polyamide type polyether polyols. Copolyethers can also be utilized in the technology described herein. Typical copolyethers include the reaction product of THF and ethylene oxide or THF and propylene oxide. These are available from BASF as Poly THF B, a block copolymer, and poly THF R, a random copolymer. The various polyether intermediates generally have a number average molecular weight (Mn) as determined by assay of the terminal functional groups which is an average molecular weight greater than about 700, such as from about 700 to about 10,000, from about 1000 to about 5000, or from about 1000 to about 2500. In some embodiments, the polyether intermediate includes a blend of two or more different molecular weight polyethers, such as a blend of 2000 Mn and 1000 Mn PTMEG.

Suitable hydroxyl terminated polycarbonates include those prepared by reacting a glycol with a carbonate. U.S. Patent No. 4,131,731 discloses hydroxyl terminated polycarbonates and their preparation. Such polycarbonates are linear and have terminal hydroxyl groups with essential exclusion of other terminal groups. The essential reactants are glycols and carbonates. Suitable glycols are selected from cycloaliphatic and aliphatic diols containing 4 to 40, and or even 4 to 12 carbon atoms, and from polyoxyalkylene glycols containing 2 to 20 alkoxy groups per molecular with each alkoxy group containing 2 to 4 carbon atoms. Suitable diols include aliphatic diols containing 4 to 12 carbon atoms such as 1,4-butanediol, 1,5-pentanediol, neopentyl glycol, 1,6-hexanediol, 1,6-2,2,4-trimethylhexanediol, 1,10-decanediol, hydrogenated dilinoleylglycol, hydrogenated dioleylglycol; and cycloaliphatic diols such as 1,3-cyclohexanediol, 1,4-dimethylolcyclohexane-, 1,4-cyclohexanediol, 1,3-dimethylolcyclohexane, 1,4-endo methylene-2-hydroxy-5-hydroxymethyl cyclohexane, and polyalkylene glycols. The diols used in the reaction may be a single diol or a mixture of diols depending on the properties desired in the finished product. Polycarbonate intermediates which are hydroxyl terminated are generally those known to the art and in the literature. Suitable carbonates are selected from alkylene carbonates composed of a 5 to 7 member ring. Suitable carbonates for use herein include ethylene carbonate, trimethylene carbonate, tetramethylene carbonate, 1,2-propylene carbonate, 1,2-butylene carbonate, 2,3-butylene carbonate, 1,2-ethylene carbonate, 1,3-pentylene carbonate, 1,4-pentylene carbonate, 2,3-pentylene carbonate, and 2,4-pentylene carbonate. Also, suitable herein are dialkylcarbonates, cycloaliphatic carbonates, and diarylcarbonates. The dialkylcarbonates can contain 2 to 5 carbon atoms in each alkyl group and specific examples thereof are diethylcarbonate and dipropylcarbonate. Cycloaliphatic carbonates, especially dicycloaliphatic carbonates, can contain 4 to 7 carbon atoms in each cyclic structure, and there can be one or two of such structures. When one group is cycloaliphatic, the other can be either alkyl or aryl. On the other hand, if one group is aryl, the other can be alkyl or cycloaliphatic. Examples of suitable diarylcarbonates, which can contain 6 to 20 carbon atoms in each aryl group, are diphenylcarbonate, ditolylcarbonate, and dinaphthylcarbonate.

Suitable polysiloxane polyols include alpha-omega-hydroxyl or amine or carboxylic acid or thiol or epoxy terminated polysiloxanes. Examples include poly(dimethysiloxane) terminated with a hydroxyl or amine or carboxylic acid or thiol or epoxy group. In some embodiments the polysiloxane polyols are hydroxyl terminated polysiloxanes. In some embodiments, the polysiloxane polyols have a number-average molecular weight in the range from 300 to 5000, or from 400 to 3000.

Polysiloxane polyols may be obtained by the dehydrogenation reaction between a polysiloxane hydride and an aliphatic polyhydric alcohol or polyoxyalkylene alcohol to introduce the alcoholic hydroxy groups onto the polysiloxane backbone. Suitable examples include alpha-omega-hydroxypropyl terminated poly(dimethysiloxane) and alpha-omega-amino propyl terminated poly(dimethysiloxane), both of which are commercially available materials. Further examples include copolymers of the poly(dimethysiloxane) materials with a poly(alkylene oxide).

In some embodiments, the polyol component used to prepare the TPU further includes (or consists essentially of, or even consists of) a polycaprolactone polyester polyol and one or more additional polyols selected from the group consisting of a polyether polyol, polycarbonate polyol, polysiloxane polyol, a non-polycaprolactone polyester polyol, or any combinations thereof.

In some embodiments, the thermoplastic polyurethane is prepared with a polyol component that consists essentially of polycaprolactone polyester polyol. In some embodiments, the thermoplastic polyurethane is prepared with a polyol component that consists of polycaprolactone polyester polyol.

### The chain extender

The TPU compositions described herein are made using: (c) a chain extender component that includes at least one diol chain extender of the general formula HO-(CH₂)ₓ-OH wherein x is an integer from 9 to 16. In other embodiments, x is an integer from 9 to 12. In other embodiments, x is the integer 9 or 12.

Useful diol chain extenders include 1,9-nonanediol, 1,10-decanediol, 1,11-undecanediol, 1,12-dodecanediol, or a combination thereof. In some embodiments, the chain extender component includes (or consists essentially of, or even consists of) 1,9-nonanediol, 1,10-decanediol, 1,11-undecanediol, 1,12-dodecanediol, or a combination thereof. In some embodiments, the chain extender component includes (or consists essentially of, or even consists of) 1,9-nonanediol, 1,12-dodecanediol, or a combination thereof.

In some embodiments, the chain extender component may further include one or more additional chain extenders. These additional chain extenders are not overly limited and may include diols (other than those described above), diamines, and combinations thereof.

Suitable additional chain extenders include relatively small polyhydroxy compounds, for example lower aliphatic or short chain glycols having from 2 to 20, or 2 to 12, or 2 to 10 carbon atoms. Suitable examples include ethylene glycol, diethylene glycol, propylene glycol, dipropylene glycol, 1,4-butanediol (BDO), 1,6-hexanediol (HDO), 1,3-butanediol, 1,5-pentanediol, neopentylglycol, 1,4-cyclohexanedimethanol (CHDM), 2,2-bis[4-(2-hydroxyethoxy)phenyl]propane (HEPP), hexamethylenediol, heptanediol, nonanediol, dodecanediol, ethylenediamine, butanediamine, hexamethylenediamine, and hydroxyethyl resorcinol (HER), and the like, as well as mixtures thereof. In some embodiments, the chain extender includes BDO, HDO, or a combination thereof. In some embodiments, the chain extender includes BDO. Other glycols, such as aromatic glycols could be used, but in some embodiments the TPUs described herein are essentially free of or even completely free of such materials.

In some embodiments, the additional chain extender includes a cyclic chain extender. Suitable examples include CHDM, HEPP, HER, and combinations thereof. In some embodiments, the additional chain extender includes an aromatic cyclic chain extender, for example HEPP, HER, or a combination thereof. In some embodiments, the additional chain extender includes an aliphatic cyclic chain extender, for example CHDM. In some embodiments, the additional chain extender is substantially free of, or even completely free of aromatic chain extenders, for example aromatic cyclic chain extenders. In some embodiments, the additional chain extender is substantially free of, or even completely free of polysiloxanes.

### The thermoplastic polyurethane compositions

The compositions described herein are TPU compositions. They contain one or more TPU. These TPU are prepared by reacting: a) the polyisocyanate component described above; b) the polyol component that concludes at least one polycaprolactone polyester polyol described above; and c) the chain extender component that includes at least one diol chain extender of the general formula HO-(CH₂)ₓ-OH wherein x is an integer from 9 to 16 described above.

The resulting TPU has a Shore D hardness of more than 40, in some embodiments more than 50, and in still other embodiments at least 60, as measured by ASTM D2240. In other embodiments, these hardness values may applied to the overall TPU composition, that is, the resulting TPU composition has a Shore D hardness of more than 50, and in other embodiments at least 60.

The resulting TPU may also have a haze value of less than 36, as measured by ASTM D1003.

In some embodiments, the resulting TPU may also have a rebound value of greater than 35, as measured by the drop ball rebound method, as described in US patent 6221999. For this test, a 1/2 inch diameter stainless steel ball is dropped by a mechanical device from a height of one meter onto a 5/8 inch thick test sample. A scale in centimeter increments behind the ball and polyurethane sample is used to determine the percent rebound of the original one meter height that was achieved on the first bounce. The test sample is mounted in a manner such that it could not move or vibrate, and the mounting surface and stand, if any, could not absorb energy, e.g., a heavy steel platform. The thickness of the polyurethane sample could vary by +/-1/8 without a significant effect on the percent rebound result. Ten bounces were performed with the best five being averaged.

In some embodiments, the TPU has a Shore D hardness of more than 40, 50, or even 60, a haze value of less than 36, and a rebound value of greater than 35.

In some embodiments, the resulting TPU may also have a dynamic mechanical analysis (DMA) value, an indication of its recovery properties, measured at 0.1 rad/s of less than 0.5000, and a DMA value measured at 100 rad/s of less than 0.3200. The DMA testing is completed by completing a dynamic frequency sweep using a Rheometrics ARES system on a rectangle torsion mode samples measuring 10 mm by 12.7 mm by 1.0 mm, at a temperature of 23°C, a strain of 0.2% and frequencies from 0.1 to 100 rad/sec.

In other embodiments, these haze and rebound values may applied to the overall TPU composition, that is, the resulting TPU composition may have a haze value of less than 36 and a rebound value of greater than 35, in addition to having a Shore D hardness of more than 50, and in other embodiments at least 60.

In some embodiments, the molar ratio of the chain extender to the polyol of the TPU is not limited so long as the hardness requirements are met. In some embodiments, the molar ratio of the chain extender to the polyol of the TPU is from 6.51 to 21.37.

The hard segment content of the TPU, calculated by adding the weight percent content of chain extender and polyisocyanate in the TPU and dividing that total by the sum of the weight percent contents of the chain extender, polyisocyanate, and polyol in the TPU is from 59.8 to 77.0 percent.

That is, in some embodiments the TPU is prepared from the described polyisocyanate, the described polyol (i.e. one or more polycaprolactone polyester polyols), and the described chain extender (i.e. one or more diol chain extenders of the general formula HO-(CH₂)ₓ-OH wherein x is an integer from 9 to about 16) where the molar ratio of the chain extender to the polyol of the TPU is from 6.51 to 21.37 and the hard segment content of the TPU is from 59.8 to 77.0 percent.

As indicated above, the described compositions include the TPU materials described above and also TPU compositions that include such TPU materials and one or more additional components. These additional components include other polymeric materials that may be blended with the TPU described herein. These additional components include one or more additives that may be added to the TPU, or blend containing the TPU, to impact the properties of the composition.

The TPU described herein may also be blended with one or more other polymers. The polymers with which the TPU described herein may be blended are not overly limited. In some embodiments, the described compositions include a two or more of the described TPU materials. In some embodiments, the compositions include at least one of the described TPU materials and at least one other polymer, which is not one of the described TPU materials.

Polymers that may be used in combination with the TPU materials described herein also include more conventional TPU materials such as non-caprolactone polyester-based TPU, polyether-based TPU, or TPU containing both non-caprolactone polyester and polyether groups. Other suitable materials that may be blended with the TPU materials described herein include polycarbonates, polyolefins, styrenic polymers, acrylic polymers, polyoxymethylene polymers, polyamides, polyphenylene oxides, polyphenylene sulfides, polyvinylchlorides, chlorinated polyvinylchlorides, polylactic acids, or combinations thereof.

Polymers for use in the blends described herein include homopolymers and copolymers. Suitable examples include: (i) a polyolefin (PO), such as polyethylene (PE), polypropylene (PP), polybutene, ethylene propylene rubber (EPR), polyoxyethylene (POE), cyclic olefin copolymer (COC), or combinations thereof; (ii) a styrenic, such as polystyrene (PS), acrylonitrile butadiene styrene (ABS), styrene acrylonitrile (SAN), styrene butadiene rubber (SBR or HIPS), polyalphamethylstyrene, styrene maleic anhydride (SMA), styrene-butadiene copolymer (SBC) (such as styrene-butadiene-styrene copolymer (SBS) and styrene-ethylene/butadiene-styrene copolymer (SEBS)), styrene-ethylene/propylene-styrene copolymer (SEPS), styrene butadiene latex (SBL), SAN modified with ethylene propylene diene monomer (EPDM) and/or acrylic elastomers (for example, PS-SBR copolymers), or combinations thereof; (iii) a thermoplastic polyurethane (TPU) other than those described above; (iv) a polyamide, such as Nylon™, including polyamide 6,6 (PA66), polyamide 1,1 (PA11), polyamide 1,2 (PA12), a copolyamide (COPA), or combinations thereof; (v) an acrylic polymer, such as polymethyl acrylate, polymethylmethacrylate, a methyl methacrylate styrene (MS) copolymer, or combinations thereof; (vi) a polyvinylchloride (PVC), a chlorinated polyvinylchloride (CPVC), or combinations thereof; (vii) a polyoxyemethylene, such as polyacetal; (viii) a polyester, such as polyethylene terephthalate (PET), polybutylene terephthalate (PBT), copolyesters and/or polyester elastomers (COPE) including polyether-ester block copolymers such as glycol modified polyethylene terephthalate (PETG), polylactic acid (PLA), polyglycolic acid (PGA), copolymers of PLA and PGA, or combinations thereof; (ix) a polycarbonate (PC), a polyphenylene sulfide (PPS), a polyphenylene oxide (PPO), or combinations thereof; or combinations thereof.

In some embodiments, these blends include one or more additional polymeric materials selected from groups (i), (iii), (vii), (viii), or some combination thereof. In some embodiments, these blends include one or more additional polymeric materials selected from group (i). In some embodiments, these blends include one or more additional polymeric materials selected from group (iii). In some embodiments, these blends include one or more additional polymeric materials selected from group (vii). In some embodiments, these blends include one or more additional polymeric materials selected from group (viii).

The additional additives suitable for use in the TPU compositions described herein are not overly limited. Suitable additives include pigments, UV stabilizers, UV absorbers, antioxidants, lubricity agents, heat stabilizers, hydrolysis stabilizers, cross-linking activators, flame retardants, layered silicates, fillers, colorants, reinforcing agents, adhesion mediators, impact strength modifiers, antimicrobials, and any combination thereof.

In some embodiments, the additional component is a flame retardant. Suitable flame retardants are not overly limited and may include a boron phosphate flame retardant, a magnesium oxide, a dipentaerythritol, a polytetrafluoroethylene (PTFE) polymer, or any combination thereof. In some embodiments, this flame retardant may include a boron phosphate flame retardant, a magnesium oxide, a dipentaerythritol, or any combination thereof. A suitable example of a boron phosphate flame retardant is BUDIT 326, commercially available from Budenheim USA, Inc. When present, the flame retardant component may be present in an amount from 0 to 10 weight percent of the overall TPU composition, in other embodiments from 0.5 to 10, or from 1 to 10, or from 0.5 or 1 to 5, or from 0.5 to 3, or even from 1 to 3 weight percent of the overall TPU composition.

The TPU compositions described herein may also include additional additives, which may be referred to as a stabilizer. The stabilizers may include antioxidants such as phenolics, phosphites, thioesters, and amines, light stabilizers such as hindered amine light stabilizers and benzothiazole UV absorbers, and other process stabilizers and combinations thereof. In one embodiment, the preferred stabilizer is Irganox 1010 from BASF and Naugard 445 from Chemtura. The stabilizer is used in the amount from about 0.1 weight percent to about 5 weight percent, in another embodiment from about 0.1 weight percent to about 3 weight percent, and in another embodiment from about 0.5 weight percent to about 1.5 weight percent of the TPU composition.

In addition, various conventional inorganic flame retardant components may be employed in the TPU composition. Suitable inorganic flame retardants include any of those known to one skilled in the art, such as metal oxides, metal oxide hydrates, metal carbonates, ammonium phosphate, ammonium polyphosphate, calcium carbonate, antimony oxide, clay, mineral clays including talc, kaolin, wollastonite, nanoclay, montmorillonite clay which is often referred to as nanoclay, and mixtures thereof. In one embodiment, the flame retardant package includes talc. The talc in the flame retardant package promotes properties of high limiting oxygen index (LOI). The inorganic flame retardants may be used in the amount from 0 to about 30 weight percent, from about 0.1 weight percent to about 20 weight percent, in another embodiment about 0.5 weight percent to about 15 weight percent of the total weight of the TPU composition.

Still further optional additives may be used in the TPU compositions described herein. The additives include colorants, antioxidants (including phenolics, phosphites, thioesters, and/or amines), antiozonants, stabilizers, inert fillers, lubricants, inhibitors, hydrolysis stabilizers, light stabilizers, hindered amines light stabilizers, benzotriazole UV absorber, heat stabilizers, stabilizers to prevent discoloration, dyes, pigments, inorganic and organic fillers, reinforcing agents and combinations thereof.

All of the additives described above may be used in an effective amount customary for these substances. The non-flame retardants additives may be used in amounts of from about 0 to about 30 weight percent, in one embodiment from about 0.1 to about 25 weight percent, and in another embodiment about 0.1 to about 20 weight percent of the total weight of the TPU composition.

These additional additives can be incorporated into the components of, or into the reaction mixture for, the preparation of the TPU resin, or after making the TPU resin. In another process, all the materials can be mixed with the TPU resin and then melted or they can be incorporated directly into the melt of the TPU resin.

The TPU materials described above may be prepared by a process that includes the step of (I) reacting: a) the polyisocyanate component described above; b) the polyol component comprising at least one polycaprolactone polyester polyol described above; and c) a chain extender component comprising at least one diol chain extender of the general formula HO-(CH₂)ₓ-OH wherein x is an integer from 9 to about 16 described above. The process results in the TPU material which has a Shore D hardness of more than 50.

The process may further include the step of: (II) mixing the TPU composition of step (I) with one or more blend components, including one or more additional TPU materials and/or polymers, including any of those described above.

The process may further include the step of: (II) mixing the TPU composition of step (I) with one or more additional additives selected from the group consisting of pigments, UV stabilizers, UV absorbers, antioxidants, lubricity agents, heat stabilizers, hydrolysis stabilizers, cross-linking activators, flame retardants, layered silicates, fillers, colorants, reinforcing agents, adhesion mediators, impact strength modifiers, and antimicrobials.

The process may further include the step of: (II) mixing the TPU composition of step (I) with one or more blend components, including one or more additional TPU materials and/or polymers, including any of those described above, and/or the step of: (III) mixing the TPU composition of step (I) with one or more additional additives selected from the group consisting of pigments, UV stabilizers, UV absorbers, antioxidants, lubricity agents, heat stabilizers, hydrolysis stabilizers, cross-linking activators, flame retardants, layered silicates, fillers, colorants, reinforcing agents, adhesion mediators, impact strength modifiers, and antimicrobials.

The TPU materials and/or compositions described herein may be used in he prepared of one or more articles. The specific type of articles that may be made from the TPU materials and/or compositions described herein are not overly limited.

The technology described herein also provides a method of improving the recovery properties of a TPU materials and/or composition. The method involves using the polycaprolactone polyester polyol described above and the chain extender component comprising at least one diol chain extender of the general formula HO-(CH₂)ₓ-OH wherein x is an integer from 9 to about 16 described above to prepare a TPU material, in place of or in combination with the polyol and chain extender of the original TPU, resulting in a TPU material and/or compositions with improved recovery properties. In some embodiments, this improvement is accomplished while maintaining the hardness of the TPU, such that the TPU material and/or composition has a Shore D hardness of more than 50, and in other embodiments at least 60.

The invention further provides an article made with the TPU materials and/or compositions described herein. In some embodiments these articles are prepared foaming, blow molding, injection molding, or any combination thereof.

The amount of each chemical component described is presented exclusive of any solvent or diluent oil, which may be customarily present in the commercial material, that is, on an active chemical basis, unless otherwise indicated. However, unless otherwise indicated, each chemical or composition referred to herein should be interpreted as being a commercial grade material which may contain the isomers, byproducts, derivatives, and other such materials which are normally understood to be present in the commercial grade.

It is known that some of the materials described above may interact in the final formulation, so that the components of the final formulation may be different from those that are initially added. For instance, metal ions (of, e.g., a flame retardant) can migrate to other acidic or anionic sites of other molecules. The products formed thereby, including the products formed upon employing the composition of the technology described herein in its intended use, may not be susceptible of easy description. Nevertheless, all such modifications and reaction products are included within the scope of the technology described herein; the technology described herein encompasses the composition prepared by admixing the components described above.

### EXAMPLES

The technology described herein may be better understood with reference to the following non-limiting examples.

A series of TPU examples are prepared to demonstrate the benefits of the invention. The formulations of the TPU examples are summarized in the tables below. Each of the examples is prepared by compression molding.

**Table 1: Formulations of TPU Examples**

| | Polyisocyanate ¹ | Polyol² | Chain Extender³ | CE:Polyol mole ratio⁴ | Percent Hard Segment⁵ |
|---|---|---|---|---|---|
| Inv Ex 1 | MDI | CAP2K | DDO | 7.89 | 66.0 |
| Inv Ex 2 | MDI | CAP3K | NDO | 10.64 | 61.0 |
| Inv Ex 3 | MDI | CAP3K | DDO | 12.90 | 67.3 |
| Inv Ex 4 | MDI | CAP2K | NDO | 6.51 | 59.8 |
| Comp Ex 5 | MDI | BDO/HDO-A | NDO | 6.26 | 51.7 |
| Comp Ex 6 | MDI | BDO/HDO-A | NDO | 13.96 | 69.4 |
| Inv Ex 7 | MDI | CAP3K | DDO | 21.37 | 77.0 |
| Inv Ex 8 | MDI | CAP2K | DDO | 13.32 | 76.1 |
| Inv Ex 9 | MDI | CAP3K | NDO | 15.93 | 69.7 |
| Inv Ex 10 | MDI | CAP2K | NDO | 9.93 | 68.8 |
| Comp Ex 11 | MDI | BDO-A | PDO | 19.62 | 76.7 |
| Comp Ex 12 | MDI | BDO/HDO-A | DDO | 18.73 | 76.8 |
| Comp Ex 13 | MDI | BDO/HDO-A | DDO | 11.26 | 67.0 |
| Comp Ex 14 | MDI | CAP2K | PDO | 6.41 | 56.2 |
| Comp Ex 15 | MDI | BDO-A | DDO | 15.14 | 76.4 |
| Comp Ex 16 | MDI | BDO-A | HDO | 7.05 | 56.5 |
| Comp Ex 17 | MDI | BDO-A | HDO | 11.03 | 66.3 |
| Comp Ex 18 | MDI | DDO/DDA | DDO | 9.27 | 80.0 |
| Comp Ex 19 | MDI | BDO-A | DDO | 9.02 | 66.4 |
| Comp Ex 20 | MDI | BDO-A | PDO | 7.30 | 56.4 |
| Comp Ex 21 | MDI | DDO/DDA | DDO | 19.33 | 80.3 |
| Comp Ex 22 | MDI | BDO-A | PDO | 11.55 | 66.5 |
| Comp Ex 23 | MDI | CAP2K | PDO | 10.20 | 66.3 |
| Comp Ex 24 | MDI | BDO-A | HDO | 18.34 | 76.2 |
| Comp Ex 25 | MDI | DDO/DDA | DDO | 3.15 | 60.0 |
| Comp Ex 26 | MDI | CAP2K | HDO | 16.24 | 76.0 |
| Comp Ex 27 | MDI | CAP2K | HDO | 9.73 | 66.1 |
| Comp Ex 28 | MDI | CAP2K | BDO | 10.71 | 66.5 |
| Comp Ex 29 | MDI | CAP2K | PDO | 17.41 | 76.6 |
| Comp Ex 30 | MDI | DDO/DDA | DDO | 6.87 | 60.3 |
| Comp Ex 31 | MDI | DDO/DDA | DDO | 2.70 | 40.0 |
| Comp Ex 32 | MDI | BDO-A | BDO | 12.11 | 66.6 |
| Comp Ex 33 | MDI | DDO/DDA | DDO | 0.66 | 19.9 |
| Comp Ex 34 | MDI | CAP2K | BDO | 6.64 | 56.1 |
| Comp Ex 35 | MDI | BDO-A | BDO | 7.56 | 56.3 |
| Comp Ex 36 | MDI | CAP2K | HDO | 6.18 | 56.3 |
| Comp Ex 37⁶ | MDI | none | none | ----- | ----- |
| Comp Ex 38 | MDI | BDO-A | BDO | 19.97 | 76.3 |
| Comp Ex 39 | MDI | CAP2K | BDO | 17.73 | 76.2 |

| | | | | | |
|---|---|---|---|---|---|
| *1 - For the polyisocyanate column: MDI is 4,4'-methylenebis(phenyl isocyanate).* *2 - For the polyol column: CAP2K is a 2000 number average molecular weight polycaprolactone polyester polyol; CAP3K is a 3000 number average molecular weight polycaprolactone polyester polyol; BDO*/*HDO-A is a 2500 number average molecular weight adipate polyester polyol made from a mixture of 1,4-butanediol and 1,6-hexandiol; BDO-A is a 2000 number average molecular weight adipate polyester polyol made from 1,4-butanediol; DDO*/*DDA is a 1000 or 2000 number average molecular weight polyol made from a mixture of 1,12-dodecanediol and 1,12-dodecanedioci acid.* *3 - For the chain extender column: DDO is 1,12-dodecanediol; NDO is 1,9-nonanediol; PDO is 1,5 pentanediol; HDO is 1,6-hexanediol; BDO is 1,4-butanediol.* *4 - The CE:Polyol ratio is the mole ratio of the chain extender to the polyol in the TPU.* *5 - The Percent Hard Segment is calculated by adding the weight percent content of chain extender and polyisocyanate in the TPU and dividing that total by the sum of the weight percent contents of the chain extender, polyisocyanate and polyol in the TPU.* *6 - Example 37 is a commercially available polyether block amide marketed us PEBAX*^{®} *5533 by Arkema, included for comparison.* | | | | | |

Each sample is tested to verify hardness and then to measure haze, rebound, and recovery properties.

Hardness is tested by ASTM D2240 to collect the Shore D hardness of each sample. Haze is measured by ASTM D1003 with a lower value indicating lower haze and so a better result. Rebound is measured by the test method described above, with a higher value indicating better rebound properties.

The samples are also tested to verify acceptable recovery properties as indicated by a dynamic mechanical analysis (DMA) value. The DMA values are measured by completing a dynamic frequency sweep using a Rheometrics ARES system on a rectangle torsion mode samples measuring 10 mm by 12.7 mm by 1.0 mm, at a temperature of 23°C, a strain of 0.2% and frequencies from 0.1 to 100 rad/sec. The resulting values give an indication of the samples recovery properties, where a smaller tan delta value at a given frequency represents better recovery properties.

The results from this testing are summarized in the table below.

**Table 2: Test Results from TPU Examples**

| | Hardness | Haze | Rebound | Tan delta at 0.1 rad/sec | Tan delta at 100 rad/sec |
|---|---|---|---|---|---|
| Inv Ex 1 | 54 | 32.2 | 45 | 0.1227 | 0.2656 |
| Inv Ex 2 | 61 | 32.3 | 41 | 0.1347 | 0.2532 |
| Inv Ex 3 | 56 | 32.3 | 44 | 0.1282 | 0.2477 |
| Inv Ex 4 | 60 | 32.5 | 39 | 0.1299 | 0.2757 |
| Comp Ex 5 | 53 | 33.0 | 27 | 0.0755 | 0.1813 |
| Comp Ex 6 | 70 | 33.0 | 12 | 0.3858 | 0.1720 |
| Inv Ex 7 | 67 | 33.4 | 72 | 0.2137 | 0.1268 |
| Inv Ex 8 | 66 | 33.4 | 70 | 0.1971 | 0.1379 |
| Inv Ex 9 | 65 | 33.6 | 54 | 0.4675 | 0.1774 |
| Inv Ex 10 | 65 | 33.7 | 56 | 0.4703 | 0.1786 |
| Comp Ex 11 | 76 | 37.0 | 27 | 0.0412 | 0.0308 |
| Comp Ex 12 | 67 | 38.8 | 71 | 0.1954 | 0.1428 |
| Comp Ex 13 | 59 | 39.1 | 45 | 0.1312 | 0.2410 |
| Comp Ex 14 | 51 | 39.8 | 34 | 0.0159 | 0.2667 |
| Comp Ex 15 | 53 | 40.0 | 39 | 0.1911 | 0.3268 |
| Comp Ex 16 | 68 | 40.0 | 68 | 0.2538 | 0.1410 |
| Comp Ex 17 | 62 | 40.2 | 56 | 0.5057 | 0.1563 |
| Comp Ex 18 | 51 | 40.4 | 42 | 0.1636 | 0.2713 |
| Comp Ex 19 | 55 | 40.4 | 47 | 0.1525 | 0.2717 |
| Comp Ex 20 | 76 | 40.4 | 36 | 0.0343 | 0.0249 |
| Comp Ex 21 | 68 | 40.7 | 78 | 0.3914 | 0.1216 |
| Comp Ex 22 | 75 | 40.7 | 30 | 0.0608 | 0.0369 |
| Comp Ex 23 | 67 | 40.8 | 40 | 0.3267 | 0.1227 |
| Comp Ex 24 | 73 | 41.0 | 67 | 0.0541 | 0.0354 |
| Comp Ex 25 | 62 | 41.4 | 55 | 0.1593 | 0.1748 |
| Comp Ex 26 | 72 | 42.5 | 74 | 0.0482 | 0.0331 |
| Comp Ex 27 | 66 | 43.2 | 54 | 0.4221 | 0.1537 |
| Comp Ex 28 | 69 | 44.5 | 57 | 0.1326 | 0.1667 |
| Comp Ex 29 | 75 | 44.6 | 28 | 0.0359 | 0.0292 |
| Comp Ex 30 | 62 | 45.1 | 58 | 0.1360 | 0.1558 |
| Comp Ex 31 | 53 | 50.9 | 48 | 0.0791 | 0.1315 |
| Comp Ex 32 | 70 | 51.4 | 61 | 0.1309 | 0.1590 |
| Comp Ex 33 | 51 | 54.2 | 48 | 0.0679 | 0.0919 |
| Comp Ex 34 | 54 | 55.0 | 37 | 0.0916 | 0.1463 |
| Comp Ex 35 | 56 | 59.2 | 45 | 0.0948 | 0.1645 |
| Comp Ex 36 | 56 | 62.2 | 38 | 0.0710 | 0.1462 |
| Comp Ex 37 | 55 | 69 | 41 | 0.0294 | 0.0430 |
| Comp Ex 38 | 77 | 79.4 | 54 | 0.0956 | 0.0758 |
| Comp Ex 39 | 77 | 94.0 | 71 | 0.0990 | 0.0763 |

The results show the hard TPU described herein provides good haze and rebound properties, while maintaining recovery properties. The comparative examples that are missing one or more elements of the TPU described herein do not provide the same combination of properties.

The mention of any document is not an admission that such document qualifies as prior art or constitutes the general knowledge of the skilled person in any jurisdiction. Except in the Examples, or where otherwise explicitly indicated, all numerical quantities in this description specifying amounts of materials, reaction conditions, molecular weights, number of carbon atoms, and the like, are to be understood as modified by the word "about." It is to be understood that the upper and lower amount, range, and ratio limits set forth herein may be independently combined. Similarly, the ranges and amounts for each element of the technology described herein can be used together with ranges or amounts for any of the other elements.

As used herein, the transitional term "comprising," which is synonymous with "including," "containing," or "characterized by," is inclusive or open-ended and does not exclude additional, un-recited elements or method steps. However, in each recitation of "comprising" herein, it is intended that the term also encompass, as alternative embodiments, the phrases "consisting essentially of" and "consisting of," where "consisting of" excludes any element or step not specified and "consisting essentially of" permits the inclusion of additional un-recited elements or steps that do not materially affect the basic and novel characteristics of the composition or method under consideration. That is "consisting essentially of" permits the inclusion of substances that do not materially affect the basic and novel characteristics of the composition under consideration.

## Claims

1. A thermoplastic polyurethane composition comprising the reaction product of:
a) a polyisocyanate;
b) a polyol component comprising at least one polycaprolactone polyester polyol; and
c) a chain extender component comprising at least one diol chain extender of the general formula HO-(CH₂)ₓ-OH wherein x is an integer from 9 to 16; wherein the polyisocyanate and chain extender make up a hard segment of the thermoplastic polyurethane composition, wherein the thermoplastic polyurethane composition comprises 59.8 to 77.0 weight percent hard segment, and
wherein the thermoplastic polyurethane composition has a Shore D hardness measured according to ASTM D2240 of more than 50.

2. The thermoplastic polyurethane composition of claim 1 wherein:
i) the composition has a haze value measured according to ASTM D1003 of less than 36; and
ii) the composition has a rebound value measured by the drop ball rebound method of greater than 35.

3. The thermoplastic polyurethane composition of any of the claims 1 to 2 wherein the thermoplastic polyurethane composition has a Shore D hardness measured according to ASTM D2240 of more than 60.

4. The thermoplastic polyurethane composition of any of the claims 1 to 3 wherein the polyisocyanate component comprises 4,4'-methylenebis(phenyl isocyanate).

5. The thermoplastic polyurethane composition of any of the claims 1 to 4 wherein the polycaprolactone polyester polyol has a number average molecular weight from 2000 to 3000.

6. The thermoplastic polyurethane composition of any of the claims 1 to 5 wherein the chain extender component comprises 1,9-nonanediol, 1,10-decanediol, 1,11-undecanediol, 1,12-dodecanediol, or a combination thereof.

7. The thermoplastic polyurethane composition of any of the claims 1 to 6 wherein the polyisocyanate component further comprises H12MDI, HDI, TDI, IPDI, LDI, BDI, PDI, CHDI, TODI, NDI, or any combination thereof.

8. The thermoplastic polyurethane composition of any of the claims 1 to 7 wherein the polyol component further comprises a polyether polyol, polycarbonate polyol, polysiloxane polyol, a non-polycaprolactone polyester polyol, or any combinations thereof.

9. The thermoplastic polyurethane composition of any of the claims 1 to 8 wherein the chain extender component further comprises one or more additional diol chain extenders, diamine chain extenders, or a combination thereof.

10. The thermoplastic polyurethane composition of any of the claims 1 to 9 wherein the thermoplastic polyurethane composition comprises one or more additional additives selected from the group consisting of pigments, UV stabilizers, UV absorbers, antioxidants, lubricity agents, heat stabilizers, hydrolysis stabilizers, cross-linking activators, flame retardants, layered silicates, fillers, colorants, reinforcing agents, adhesion mediators, impact strength modifiers, and antimicrobials.

11. A process of making a thermoplastic polyurethane composition, said process comprising the steps of: (I) reacting:
a) a polyisocyanate;
b) a polyol component comprising at least one polycaprolactone polyester polyol; and
c) a chain extender component comprising at least one diol chain extender of the general formula HO-(CH₂)ₓ-OH wherein x is an integer from 9 to 16; wherein the polyisocyanate and chain extender make up a hard segment of the thermoplastic polyurethane composition, wherein the thermoplastic polyurethane composition comprises 59.8 to 77.0 weight percent hard segment, and
wherein the resulting thermoplastic polyurethane composition has a Shore D hardness measured according to ASTM D2240 of more than 50.

12. The process of claim 11 where said process further comprises the step of: (II) mixing the thermoplastic polyurethane composition of step (I) with one or more additional additives selected from the group consisting of pigments, UV stabilizers, UV absorbers, antioxidants, lubricity agents, heat stabilizers, hydrolysis stabilizers, cross-linking activators, flame retardants, layered silicates, fillers, colorants, reinforcing agents, adhesion mediators, impact strength modifiers, and antimicrobials

13. An article comprising the thermoplastic polyurethane composition of claim 1.

14. A method of improving the recovery properties as measured by dynamic mechanical analysis of a thermoplastic polyurethane composition, said method including the steps of:
(I) reacting:
a) a polyisocyanate;
b) a polyol component comprising at least one polycaprolactone polyester polyol; and
c) a chain extender component comprising at least one diol chain extender of the general formula HO-(CH₂)ₓ-OH wherein x is an integer from 9 to 16; wherein the polyisocyanate and chain extender make up a hard segment of the thermoplastic polyurethane composition, wherein the thermoplastic polyurethane composition comprises 59.8 to 77.0 weight percent hard segment, and
wherein the resulting thermoplastic polyurethane composition has a Shore D hardness measured according to ASTM D2240 of more than 50.

## Patentansprüche

1. Thermoplastische Polyurethanzusammensetzung umfassend das Reaktionsprodukt von:
a) einem Polyisocyanat;
b) einer Polyolkomponente umfassend mindestens ein Polycaprolactonpolyesterpolyol; und
c) einer Kettenverlängerungskomponente umfassend mindestens ein Diolkettenverlängerungsmittel der allgemeinen Formel HO-(CH₂)ₓ-OH, wobei x eine ganze Zahl von 9 bis 16 ist; wobei das Polyisocyanat und das Kettenverlängerungsmittel ein Hartsegment der thermoplastischen Polyurethanzusammensetzung bilden, wobei die thermoplastische Polyurethanzusammensetzung 59,8 bis 77,0 Gewichtsprozent Hartsegment umfasst und
wobei die thermoplastische Polyurethanzusammensetzung eine Shore D-Härte, ASTM D2240 entsprechend gemessen, von mehr als 50 aufweist.

2. Thermoplastische Polyurethanzusammensetzung nach Anspruch 1, wobei:
i) die Zusammensetzung einen Trübungswert, ASTM D1003 entsprechend gemessen, von weniger als 36 aufweist; und
ii) die Zusammensetzung einen Rückprallelastizitätswert, durch das Kugelfallrückprallverfahren gemessen, von mehr als 35 aufweist.

3. Thermoplastische Polyurethanzusammensetzung nach einem der Ansprüche 1 bis 2, wobei die thermoplastische Polyurethanzusammensetzung eine Shore D-Härte, ASTM D2240 entsprechend gemessen, von mehr als 60 aufweist.

4. Thermoplastische Polyurethanzusammensetzung nach einem der Ansprüche 1 bis 3, wobei die Polyisocyanatkomponente 4,4'Methylenbis(phenylisocyanat) umfasst.

5. Thermoplastische Polyurethanzusammensetzung nach einem der Ansprüche 1 bis 4, wobei das Polycaprolactonpolyesterpolyol ein zahlendurchschnittliches Molekulargewicht von 2000 bis 3000 aufweist.

6. Thermoplastische Polyurethanzusammensetzung nach einem der Ansprüche 1 bis 5, wobei die Kettenverlängerungskomponente 1,9-Nonandiol, 1,10-Decandiol, 1,11-Undecandiol, 1,12-Dodecandiol oder eine Kombination davon umfasst.

7. Thermoplastische Polyurethanzusammensetzung nach einem der Ansprüche 1 bis 6, wobei die Polyisocyanatkomponente ferner H12MDI, HDI, TDI, IPDI, LDI, BDI, PDI, CHDI, TODI, NDI oder irgeneine Kombination davon umfasst.

8. Thermoplastische Polyurethanzusammensetzung nach einem der Ansprüche 1 bis 7, wobei die Polyolkomponente ferner ein Polyetherpolyol, Polycarbonatpolyol, Polysiloxanpolyol, ein Nicht-Polycaprolacton-Polyesterpolyol, oder irgendeine Kombination davon umfasst.

9. Thermoplastische Polyurethanzusammensetzung nach einem der Ansprüche 1 bis 8, wobei die Kettenverlängerungskomponente ferner einen oder mehrere zusätzliche Diolkettenverlängerungsmittel, Diaminkettenverlängerungsmittel oder eine Kombination davon umfasst.

10. Thermoplastische Polyurethanzusammensetzung nach einem der Ansprüche 1 bis 9, wobei die thermoplastische Polyurethanzusammensetzung ein oder mehrere zusätzliche Zusatzmittel umfasst ausgewählt aus der Gruppe bestehend aus Pigmenten, UV-Stabilisatoren, UV-Absorptionsmitteln, Antioxidationsmitteln, Gleitmitteln, Wärmestabilisatoren, Hydrolysestabilisatoren, Vernetzungsaktivatoren, Flammverzögerungsmitteln, Schichtsilicaten, Füllstoffen, Farbmitteln, Verstärkungsmitteln, Haftvermittlern, Schlagfestigkeitsmodifiziermitteln und antimikrobiellen Mitteln.

11. Verfahren für die Herstellung einer thermoplastischen Polyurethanzusammensetzung, wobei das Verfahren die Schritte umfasst des: (I) Reagierens:
a) eines Polyisocyanats;
b) einer Polyolkomponente umfassend mindestens ein Polycaprolacton-Polyesterpolyol; und
c) einer Kettenverlängerungskomponente umfassend mindestens ein Diolkettenverlängerungsmittel der allgemeinen Formel HO-(CH₂)ₓ-OH, wobei x eine ganze Zahl von 9 bis 16 ist; wobei das Polyisocyanat und das Kettenverlängerungsmittel ein Hartsegment der thermoplastischen Polyurethanzusammensetzung bilden, wobei die thermoplastische Polyurethanzusammensetzung 59,8 bis 77,0 Gewichtsprozent Hartsegment umfasst und
wobei die thermoplastische Polyurethanzusammensetzung eine Shore D-Härte, ASTM D2240 entsprechend gemessen, von mehr als 50 aufweist.

12. Verfahren nach Anspruch 11, wobei das Verfahren ferner den Schritt umfasst des:
(II) Mischens der thermoplastischen Polyurethanzusammensetzung von Schritt (I) mit einem oder mehreren zusätzlichen Zusatzmitteln ausgewählt aus der Gruppe bestehend aus Pigmenten, UV-Stabilisatoren, UV-Absorptionsmitteln, Antioxidationsmitteln, Gleitmitteln, Wärmestabilisatoren, Hydrolysestabilisatoren, Vernetzungsaktivatoren, Flammverzögerungsmitteln, Schichtsilicaten, Füllstoffen, Farbmitteln, Verstärkungsmitteln, Haftvermittlern, Schlagfestigkeitsmodifiziermitteln und antimikrobiellen Mitteln.

13. Artikel umfassend die thermoplastische Polyurethanzusammensetzung nach Anspruch 1.

14. Verfahren zum Verbessern der Rückprallelastizitätseigenschaften, wie durch dynamische mechanische Analyse einer thermoplastischen Polyurethanzusammensetzung gemessen, wobei das Verfahren die Schritte umfasst des:
(I) Reagierens:
a) eines Polyisocyanats;
b) einer Polyolkomponente umfassend mindestens ein Polycaprolacton-Polyesterpolyol; und
c) einer Kettenverlängerungskomponente umfassend mindestens ein Diolkettenverlängerungsmittel der allgemeinen Formel HO-(CH₂)ₓ-OH, wobei x eine ganze Zahl von 9 bis 16 ist; wobei das Polyisocyanat und das Kettenverlängerungsmittel ein Hartsegment der thermoplastischen Polyurethanzusammensetzung bilden, wobei die thermoplastische Polyurethanzusammensetzung 59,8 bis 77,0 Gewichtsprozent Hartsegment umfasst und
wobei die resultierende thermoplastische Polyurethanzusammensetzung eine Shore D-Härte, ASTM D2240 entsprechend gemessen, von mehr als 50 aufweist.

## Revendications

1. Composition thermoplastique de polyuréthane comprenant le produit réactionnel de:
a) un polyisocyanate;
b) un composant polyol comprenant au moins un polycaprolactone polyester polyol; et
c) un composant extenseur de chaîne comprenant au moins un extenseur de chaîne type diol de la formule générale HO-(CH₂)ₓ-OH où x est un nombre entier d'une valeur de 9 à 16; où le polyisocyanate et l'extenseur de chaîne constituent un segment dur de la composition thermoplastique de polyuréthane, où la composition thermoplastique de polyuréthane comprend de 59,8 à 77,0 pour cent en poids de segment dur, et
où la composition thermoplastique de polyuréthane présente une dureté Shore D mesurée selon la norme ASTM D2240 supérieure à 50.

2. Composition thermoplastique de polyuréthane selon la revendication 1, dans laquelle:
i) la composition présente un indice de trouble mesuré selon la norme ASTM D1003 de moins de 36; et
ii) la composition présente une valeur de rebond mesurée selon un procédé de rebond de balle en chute supérieure à 35.

3. Composition thermoplastique de polyuréthane selon l'une quelconque des revendications 1 à 2, dans laquelle la composition thermoplastique de polyuréthane présente une dureté Shore D mesurée selon la norme ASTM D2240 supérieure à 60.

4. Composition thermoplastique de polyuréthane selon l'une quelconque des revendications 1 à 3, dans laquelle le composant polyisocyanate comprend du 4,4'-méthylènebis(isocyanate de phényle).

5. Composition thermoplastique de polyuréthane selon l'une quelconque des revendications 1 à 4, dans laquelle le polycaprolactone polyester polyol présente un poids moléculaire moyen en nombre de 2 000 à 3 000.

6. Composition thermoplastique de polyuréthane selon l'une quelconque des revendications 1 à 5, dans laquelle le composant extenseur de chaîne comprend du 1,9-nonanediol, du 1,10-décanediol, du 1,11-undécanediol, du 1,12-dodécanediol, ou une combinaison de ceux-ci.

7. Composition thermoplastique de polyuréthane selon l'une quelconque des revendications 1 à 6, dans laquelle le composant polyisocyanate comprend en outre du H12MDI, HDI, TDI, IPDI, LDI, BDI, PDI, CHDI, TODI, NDI, ou n'importe quelle combinaison de ceux-ci.

8. Composition thermoplastique de polyuréthane selon l'une quelconque des revendications 1 à 7, dans laquelle le composant polyol comprend en outre un polyéther polyol, polycarbonate polyol, polysiloxane polyol, un polyester polyol non-polycaprolactone, ou n'importe quelles combinaisons de ceux-ci.

9. Composition thermoplastique de polyuréthane selon l'une quelconque des revendications 1 à 8, dans laquelle le composant extenseur de chaîne comprend en outre un ou plusieurs extenseurs de chaîne diol additionnels, des extenseurs de chaîne diamine, ou une combinaison de ceux-ci.

10. Composition thermoplastique de polyuréthane selon l'une quelconque des revendications 1 à 9, la composition thermoplastique de polyuréthane comprenant un ou plusieurs additifs additionnels sélectionnés dans le groupe constitué des pigments, des agents stabilisants du rayonnement UV, des agents d'absorption du rayonnement UV, des antioxydants, des agents lubrifiants, des agents stabilisants de la chaleur, des agents stabilisants de l'hydrolyse, des activateurs de réticulation, des agents ignifuges, des silicates stratifiés, des charges, des colorants, des agents de renfort, des médiateurs d'adhésion, des agents de modification de la résistance aux chocs, et des agents antimicrobiens.

11. Procédé de fabrication d'une composition thermoplastique de polyuréthane, ledit procédé comprenant les étapes de: (I) réaction:
a) d'un polyisocyanate;
b) d'un composant polyol comprenant au moins un polycaprolactone polyester polyol; et
c) d'un composant extenseur de chaîne comprenant au moins un extenseur de chaîne diol de la formule générale HO-(CH₂)ₓ-OH où x est un nombre entier d'une valeur de 9 à 16; où le polyisocyanate et l'extenseur de chaîne constituent un segment dur de la composition thermoplastique de polyuréthane, où la composition thermoplastique de polyuréthane comprend de 59,8 à 77,0 pour cent en poids de segment dur, et
où la composition thermoplastique de polyuréthane résultante présente une dureté Shore D mesurée selon la norme ASTM D2240 supérieure à 50.

12. Procédé selon la revendication 11, dans lequel ledit procédé comprend en outre l'étape de: (II) mélange de la composition thermoplastique de polyuréthane de l'étape (I) avec un ou plusieurs additifs additionnels sélectionnés dans le groupe constitué des pigments, des agents stabilisants du rayonnement UV, des agents d'absorption du rayonnement UV, des antioxydants, des agents lubrifiants, des agents stabilisants de la chaleur, des agents stabilisants de l'hydrolyse, des activateurs de réticulation, des agents ignifuges, des silicates stratifiés, des charges, des colorants, des agents de renfort, des médiateurs d'adhésion, des agents de modification de la résistance aux chocs, et des agents antimicrobiens.

13. Article comprenant la composition thermoplastique de polyuréthane selon la revendication 1.

14. Procédé d'amélioration des propriétés de recouvrance élastique telles que mesurées par analyse mécanique dynamique d'une composition thermoplastique de polyuréthane, ledit procédé incluant les étapes de:
(I) réaction:
a) d'un polyisocyanate;
b) d'un composant polyol comprenant au moins un polycaprolactone polyester polyol; et
c) d'un composant extenseur de chaîne comprenant au moins un extenseur de chaîne diol de la formule générale HO-(CH₂)ₓ-OH où x est un nombre entier d'une valeur de 9 à 16; où le polyisocyanate et l'extenseur de chaîne constituent un segment dur de la composition thermoplastique de polyuréthane, où la composition thermoplastique de polyuréthane comprend de 59,8 à 77,0 pour cent en poids de segment dur, et
où la composition thermoplastique de polyuréthane résultante présente une dureté Shore D mesurée selon la norme ASTM D2240 supérieure à 50.
